# FASCICULE DE BREVET EUROPEEN

(11) **EP 3 609 847 B1**
(45) Date de publication et mention de la délivrance du brevet: **01.06.2022**
(21) Numéro de dépôt: 18722679.0
(22) Date de dépôt: 06.04.2018
(51) Int. Cl.: C02F 5/08, D06F 75/10

(54) **APPAREIL ELECTROMENAGER COMPORTANT DES MOYENS POUR CHAUFFER DE L'EAU ET UN DISPOSITIF DE LIBERATION D'UN AGENT ANTITARTRE DANS L'EAU**
ELEKTRISCHES HAUSHALTSGERÄT MIT EINEM MITTEL ZUR HEISSUNG VON WASSER UND EINE VORRICHTUNG ZUR AUSLÖSUNG EINES ANTISCALINGMITTELS IN WASSER
DOMESTIC ELECTRICAL APPLIANCE COMPRISING MEANS FOR HEATING WATER AND A DEVICE FOR RELEASING AN ANTI-SCALING AGENT IN WATER

(30) Priorité: 12.04.2017 FR 1753227
(43) Date de publication de la demande: 19.02.2020
(73) Titulaire: SEB S.A., 69130 Ecully (FR)
(72) Inventeur: GELUS, Dominique, 38780 Pont-Eveque (FR)
(74) Mandataire: SEB Développement
(86) Numéro de dépôt international: PCT/FR2018/050872
(87) Numéro de publication internationale: WO 2018/189464

(56) Documents cités:
- EP-A1- 0 948 462
- EP-A1- 3 064 640
- WO-A1-98/28485

## Description

La présente invention concerne un appareil électroménager à usage domestique comportant des moyens pour chauffer de l'eau et un dispositif de libération d'un agent antitartre dans l'eau destinée à être chauffée.

Il est connu de la demande de brevet EP 1 146 164, un fer à repasser comportant un générateur de vapeur alimenté en eau par un réservoir comprenant un dispositif de libération d'un agent antitartre. Dans ce document, l'agent antitartre libéré est de l'hexamétaphosphate de sodium (HMPS) qui présente l'avantage de ralentir la croissance des cristaux de CaCO₃, ces cristaux constituant le principal composant du tartre. Un tel composé HMPS présente cependant l'inconvénient de se dissoudre très rapidement dans l'eau de sorte que ce document enseigne de l'envelopper dans une membrane étanche de manière à réduire sa vitesse de dilution et augmenter sa durée de vie.

Le document EP 0 610 997 divulgue également un fer à repasser comportant un générateur de vapeur alimenté en eau par un réservoir comprenant un dispositif de libération d'un agent antitartre. Dans ce document, l'agent antitartre libéré est un composé phosphonate qui présente une vitesse de dilution lente.

De tels appareils sont équipés de dispositif de libération d'un agent antitartre à diffusion lente qui présente l'avantage de présenter une durée de vie importante leur permettant d'être efficace sur sensiblement toute la durée de vie de l'appareil.

Toutefois, la contrepartie de cette diffusion lente est que le dispositif a besoin d'être au contact de l'eau pendant un temps suffisamment important pour que l'agent antitartre soit diffusé en quantité suffisante dans l'eau du réservoir. Ainsi, dans le cas d'un fonctionnement intensif de l'appareil, c'est-à-dire avec un renouvellement très rapide de l'eau du réservoir, ces dispositifs de traitement du tartre présentent l'inconvénient d'être inefficaces, l'agent antitartre n'ayant pas le temps d'être diffusé dans l'eau du réservoir avant que l'eau ne soit vaporisée dans le générateur de vapeur. Le document EP 3 064 640 divulgue un appareil électroménager de repassage comportant des moyens pour chauffer de l'eau et un dispositif pour la diffusion d'agents antitartre dans ladite eau.

Aussi, un but de la présente invention est de proposer un appareil électroménager à usage domestique muni d'un dispositif antitartre remédiant à ces inconvénients. En particulier, un but de la présente invention est de proposer un appareil électroménager à usage domestique comprenant des moyens pour chauffer de l'eau et un dispositif antitartre se montrant efficace sur une plus grande plage de fréquences d'utilisation de l'appareil, c'est-à-dire que l'eau reste longtemps dans l'appareil avant d'être chauffée ou qu'elle soit chauffée rapidement après son introduction dans l'appareil.

A cet effet, l'invention se rapporte à un appareil électroménager à usage domestique comportant des moyens pour chauffer de l'eau et un premier dispositif de libération d'un agent antitartre dans l'eau destinée à être chauffée, caractérisé en ce qu'il comprend au moins un deuxième dispositif de libération d'un agent antitartre dans l'eau, le deuxième dispositif de libération d'un agent antitartre diffusant ledit agent antitartre avec une vitesse de libération plus élevée que la vitesse de libération de l'agent antitartre diffusé par le premier dispositif de libération, le premier dispositif de libération et le deuxième dispositif de libération étant disposés dans deux endroits diférents de l'appareil.

Par vitesse de libération de l'agent antitartre on entend la quantité de matière active libérée dans l'eau dans un temps donné lorsque le dispositif est au contact de l'eau. Une telle combinaison de dispositifs de libération du tartre libérant des matières actives avec des vitesses de libération différentes permet d'obtenir un dispositif de traitement global dont l'efficacité est moins dépendante de la fréquence d'utilisation de l'appareil.

Selon une autre caractéristique de l'invention, le premier dispositif de libération est un dispositif de relargage dit lent qui permet de diluer l'agent antitartre dans l'eau avec une vitesse de libération inférieure à 0,1 mg/h et de préférence comprise entre 0,005 mg/h et 0,05 mg/h.

Un tel dispositif de relargage lent présente l'avantage de s'épuiser lentement de sorte qu'il peut agir pendant un temps important, de l'ordre de la durée de vie de l'appareil, tout en conservant un encombrement réduit. Il est efficace lorsque l'eau reste stockée suffisamment longtemps dans l'appareil pour que la quantité de matière libérée dans l'eau soit suffisante pour agir efficacement contre la formation du tartre.

Selon une autre caractéristique de l'invention, le deuxième dispositif de libération est un dispositif de relargage dit rapide qui permet de diluer l'agent antitartre dans l'eau avec une vitesse de libération supérieure à 0,1 mg/h et de préférence comprise entre 0,2 mg/h et 1 mg/h et avantageusement de l'ordre de 0,5 mg/h. Un tel dispositif de relargage rapide présente l'avantage de diffuser rapidement la matière active dans l'eau de sorte que son action est efficace même lorsque l'eau n'est que momentanément au contact du dispositif de relargage.

Selon une autre caractéristique de l'invention, le premier dispositif de libération comporte une matrice en silicone hydrophile contenant de l'hexamétaphosphate de sodium qui est contenu à l'intérieur d'un tube étanche présentant au moins une extrémité ouverte, et/ou comprend un composé de phosphonate.

Selon une autre caractéristique de l'invention, le deuxième dispositif de libération comporte une matrice en silicone hydrophile contenant de l'hexamétaphosphate de sodium qui n'est pas recouverte par un tube étanche de manière à être au contact de l'eau sur toute sa superficie et/ou comprend un cristal d'hexamétaphosphate de sodium, et/ou comprend un acide polyaspartique. Selon l'invention, le premier et le deuxième dispositif de libération sont disposés dans deux endroits différents de l'appareil.

Une telle caractéristique permet d'adapter l'emplacement des dispositifs de libération pour optimiser leur efficacité et leur durée de vie.

En particulier, le premier dispositif de libération sera préférentiellement disposé dans un endroit où l'eau résiduelle de l'appareil a tendance à être stockée, de manière à ce que le premier dispositif de libération soit le plus souvent en contact avec l'eau. Le deuxième dispositif de libération sera préférentiellement disposé dans un endroit de l'appareil qui est balayé par l'eau mais où l'eau ne stagne pas, de manière à ce que le deuxième dispositif de libération soit seulement momentanément au contact de l'eau.

Selon une autre caractéristique de l'invention, les moyens pour chauffer l'eau sont alimentés par un circuit d'eau comprenant un réservoir d'eau.

Selon l'invention, le premier et le deuxième dispositif de libération d'un agent antitartre sont disposés dans deux endroits différents du réservoir.

Selon encore une autre caractéristique de l'invention, le deuxième dispositif de libération est disposé dans une partie du circuit d'eau qui est balayée par l'eau introduite dans le réservoir, sans être toutefois immergé en permanence lorsque le réservoir est rempli au niveau maximum préconisé pour un fonctionnement normal de l'appareil.

Selon une autre caractéristique de l'invention, le réservoir comporte un orifice de remplissage et le deuxième dispositif de libération est disposé au voisinage de l'orifice de remplissage.

Selon encore une autre caractéristique de l'invention, le premier dispositif de libération est disposé dans le fond du réservoir.

Selon une autre caractéristique de l'invention, le deuxième dispositif de libération libère un agent antitartre présentant une composition chimique différente de celle de l'agent antitartre libéré par le premier dispositif de libération.

Selon encore une autre caractéristique de l'invention, les moyens pour chauffer l'eau sont un générateur de vapeur.

Selon encore une autre caractéristique de l'invention, l'appareil électroménager est un appareil de repassage à la vapeur.

Selon une autre caractéristique de l'invention, l'appareil électroménager est un fer à repasser comportant une semelle chauffante munie d'une surface de repassage et comprenant un corps surmontant la semelle, le corps comportant une poignée de préhension et un talon sur lequel le fer à repasser peut reposer avec la semelle disposée sensiblement verticalement.

Selon une autre caractéristique de l'invention, le premier dispositif de libération est disposé dans une zone du réservoir qui se trouve immergée dans l'eau résiduelle du réservoir lorsque le fer à repasser est disposé verticalement sur son talon. Selon une autre caractéristique de l'invention, le deuxième dispositif de libération est disposé dans une zone du réservoir qui se trouve émergée lorsque le fer à repasser est disposé verticalement sur son talon.

On comprendra mieux les buts, aspects et avantages de la présente invention, d'après la description donnée ci-après de deux modes particuliers de réalisation de l'invention présentés à titre d'exemples non limitatifs, en se référant aux dessins annexés dans lesquels :
- la figure 1 est une section longitudinale simplifiée d'un fer à repasser selon un premier mode de réalisation de l'invention ;
- la figure 2 est une section longitudinale simplifiée d'un fer à repasser selon un deuxième mode de réalisation de l'invention.

Seuls les éléments nécessaires à la compréhension de l'invention ont été représentés. Pour faciliter la lecture des dessins les mêmes éléments portent les mêmes références d'une figure à l'autre.

On notera que dans ce document, les termes "horizontal", "vertical", "inférieur", "supérieur", "avant", "arrière" employés pour décrire le fer à repasser font référence à cet appareil lorsqu'il repose à plat sur sa semelle.

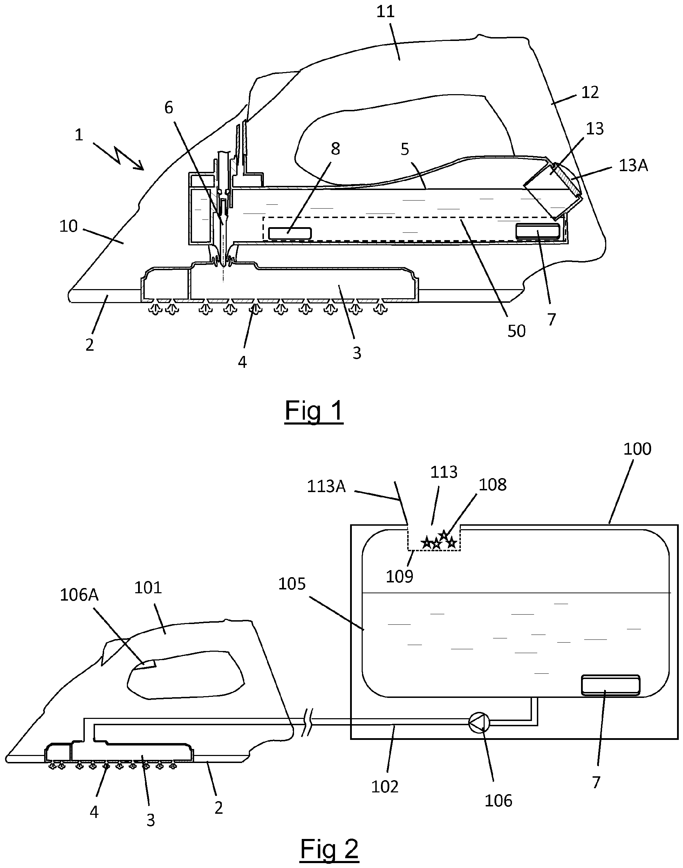

La figure 1 illustre un fer à repasser 1 à vapeur comportant une semelle 2 chauffante, avantageusement constituée par une fonderie en aluminium dans laquelle est noyée une résistance électrique, la semelle 2 renfermant classiquement une chambre de vaporisation 3 qui alimente en vapeur des trous de sortie de vapeur 4 ménagés sur la face inférieure de la semelle 2 destinée à être en contact avec le linge à repasser.

Le fer à repasser 1 comporte un circuit d'alimentation de la chambre de vaporisation 3 comprenant un réservoir 5 d'eau à vaporiser, intégré dans un boîtier 10 surmontant la semelle 2, et un système de goutte à goutte 6 permettant l'alimentation en eau de la chambre de vaporisation 3 à partir du réservoir 5.

Le boitier 10 comprend une poignée 11 de préhension s'étendant longitudinalement au fer à repasser 1 et présentant une extrémité arrière se prolongeant par un talon 12 sur lequel le fer à repasser peut reposer sensiblement verticalement lors des phases inactives de repassage, le talon 12 comportant un bouchon 13A amovible donnant accès à un orifice de remplissage 13 du réservoir.

A l'intérieur du réservoir 5 sont disposés un premier dispositif 7 de libération d'un agent antitartre dans l'eau du réservoir 5, dit dispositif de relargage lent, et un deuxième dispositif 8 de libération d'un agent antitartre, dit dispositif de relargage rapide.

Le dispositif de relargage lent 7 est avantageusement constitué par un dispositif tel que décrit dans la demande de brevet WO98/28485 déposée par la demanderesse.

A titre d'exemple, le dispositif de relargage lent est constitué par un tube 7 de section constante, de diamètre interne 7 mm et de longueur 15 cm, en silicone étanche dans lequel est moulé une matrice élastomère en silicone hydrophile contenant d'hexamétaphosphate de sodium (HMPS) en dispersion solide. Ce tube 7 est disposé dans le fond du réservoir 5, de préférence à proximité de l'extrémité arrière du réservoir 5 de manière à ce que le tube 7 baigne dans l'eau résiduelle du réservoir 5 lorsque le fer à repasser est stocké en reposant verticalement sur son talon 12.

De manière connue en soi, le tube 7 comporte deux extrémités longitudinales ouvertes au niveau desquelles la matrice en silicone hydrophile est au contact de l'eau contenue dans le réservoir 5, la surface périphérique de la matrice étant isolée de l'eau par le tube en silicone étanche enveloppant la matrice.

Un tel tube 7 relargue par les bouts environ 0,05 mg/h d'HMPS lorsqu'il est plongé dans l'eau. En effet, les grains d'HMPS très hydrophiles se chargent en eau au niveau des extrémités ouvertes du tube 7, de sorte qu'ils gonflent et brisent le réseau de silicone. Le front de diffusion d'HMPS progresse lentement dans la matrice dans l'axe du tube 7 et la diffusion est bien contrôlée.

Bien entendu, le taux de relargage d'un tel dispositif pourra être augmenté en augmentant le diamètre du tube 7 de manière à augmenter la surface en contact direct avec l'eau au niveau des extrémités du tube 7, la longueur du tube 7 conditionnant la durée de vie du dispositif.

Ainsi, la demanderesse s'est rendu compte qu'une longueur de 15 cm du tube 7 permettait d'avoir une libération contrôlée de la matière active antitartre sur une durée correspondant à une utilisation du fer à repasser sur 5 ans.

Le dispositif de relargage rapide 8 est avantageusement constitué par un bâton 8 d'hexamétaphosphate de sodium (HMPS) surmoulé dans du silicone hydrophile et disposé dans le fond du réservoir 5. Le bâton 8 est placé de préférence dans une zone avant du réservoir de manière à ce que le bâton 8 ne soit pas immergé dans l'eau du réservoir 5 lorsque le fer à repasser 1 repose verticalement sur son talon 12.

Le bâton 8 d'HMPS est, à la différence de la matrice d'HMPS utilisée dans le dispositif de relargage lent 7, non recouvert de silicone étanche sur sa périphérie de manière à ce qu'il relargue de la matière active antitartre sur toute sa surface. Un tel bâton 8 libère la matière active avec un taux d'environ 0,5 mg/h, le bâton 8 présentant avantageusement un diamètre de 5 mm et une longueur de 15 cm pour une durée de vie d'environ 250 heures.

De manière préférentielle, le réservoir 5 comporte une fenêtre transparente 50, illustrée en pointillés sur la figure 1, qui permet d'avoir à la fois un contrôle visuel sur le niveau d'eau dans le réservoir 5 et sur le dispositif de relargage rapide 8 et le dispositif de relargage lent 7, permettant à l'utilisateur par un simple coup d'œil d'avoir une idée de l'état d'usure de ces deux dispositifs.

A l'usage, lorsque l'utilisateur souhaite effectuer une séance de repassage, il prend le fer à repasser 1 et vérifie le niveau d'eau dans le réservoir 5.

Si l'utilisateur a pour habitude de vider le réservoir 5 avant de stocker son fer à repasser 1, le réservoir 5 est vide et l'utilisateur doit donc le remplir avant d'effectuer la séance de repassage à la vapeur.

Lorsque l'eau est introduite dans le réservoir 5, elle parvient à la fois au contact du dispositif de largage lent 7 et du dispositif de largage rapide 8. L'eau interagit avec le bâton d'HMPS du dispositif de largage rapide 7 et se charge rapidement en HMPS.

L'utilisateur peut donc utiliser immédiatement le fer à repasser 1, l'eau chargée en HMPS étant envoyée dans la chambre de vaporisation 3 par le système de goutte à goutte 6 où elle se vaporise. La vapeur produite par la chambre de vaporisation 3 s'évacue alors vers le linge en passant au travers des trous de sortie de vapeur 4 de la semelle 2. Le tartre laissé par la vaporisation se trouve en grande majorité sous forme pulvérulente, grâce à l'action de l'HMPS qui ralentit la croissance de cristaux de CaCO3, de sorte qu'il s'évacue en poudre fine, invisible à l'œil nu, en étant entrainé par le flux de vapeur au travers des trous de sortie de vapeur 4 de la semelle.

A la fin de la séance de repassage, l'utilisateur va vider le réservoir 5, s'il reste encore de l'eau dans ce dernier, en vue du stockage du fer à repasser 1 jusqu'à la prochaine séance de repassage. Lors de ces périodes de stockage, le bâton 8 constituant le dispositif de relargage rapide ne s'épuise pas étant donné qu'il n'est pas en contact avec de l'eau. La durée de vie du bâton 8, qui est de quelques semaines lorsqu'il reste plongé dans l'eau, va alors correspondre à plusieurs années d'utilisation du fer à repasser.

A l'inverse, si l'utilisateur n'a pas pour habitude de vider le réservoir 5 avant de stocker le fer à repasser, de l'eau peut rester régulièrement dans le réservoir 5 pendant plusieurs heures ou plusieurs jours. Si le fer à repasser est stocké verticalement sur son talon 12, le bâton 8 va se retrouver émergé en dehors de l'eau du réservoir 5 de sorte que le bâton 8 ne va pas s'épuiser.

Par contre, si le fer à repasser 1 est stocké horizontalement sur sa semelle 2, le bâton 8 d'HMPS va rester immergé dans l'eau du réservoir 5 pendant la période de stockage ce qui va conduire à une usure rapide de ce dernier, de sorte que sa durée de vie ne sera que de quelques semaines. Toutefois, l'eau qui reste stockée dans le réservoir 5 va se charger progressivement en HMPS, même après épuisement du bâton 8 d'HMPS, grâce à l'action du dispositif de largage lent 7.

L'utilisation du fer à repasser 1 avec de l'eau stockée longuement dans le réservoir 5, et donc chargée en HMPS grâce à l'action du dispositif de largage lent 7, va conduire aux mêmes effets que ceux décrits précédemment pour l'utilisateur ayant l'habitude de vider le réservoir 5 après chaque séance de repassage.

Ainsi, le fer à repasser précédemment décrit, équipé à la fois d'un dispositif de relargage lent 7 et d'un dispositif de relargage rapide 8 d'un agent antitartre présente l'avantage d'assurer une fonction antitartre efficace quelle que soit la fréquence d'utilisation de l'appareil et/ou quelles que soient les habitudes de l'utilisateur concernant le stockage de l'eau et/ou le remplissage du réservoir.

La figure 2, illustre un second mode de réalisation de l'invention dans lequel l'appareil pour le traitement du linge comporte un fer à repasser 101 relié à une base externe 100 par un conduit 102, la base externe 100 comportant un réservoir 105 et une pompe 106 électrique permettant d'envoyer de l'eau du réservoir 105 en direction du fer à repasser 101.

Le fer à repasser 101 comporte tout comme pour le premier mode de réalisation, une semelle 2 chauffante avantageusement constituée par une fonderie en aluminium dans laquelle est noyée une résistance électrique et une chambre de vaporisation 3, intégrée dans la semelle 2, qui alimente en vapeur des trous de sortie de vapeur 4 ménagés sur la face inférieure de la semelle 2 destinée à être en contact avec le linge à repasser.

Le réservoir 105, la pompe 106 et le conduit 102 forment un circuit d'eau qui permet d'alimenter en eau la chambre de vaporisation 3, le pilotage de la pompe 106 s'effectuant avantageusement au moyen d'une gâchette 106A disposée sous la poignée du fer à repasser 101.

Le réservoir 105 comporte, tout comme pour le premier mode de réalisation, un premier dispositif de libération d'un agent antitartre 7 dans l'eau, dit dispositif de relargage lent, qui est disposé dans le fond du réservoir 105 et qui est avantageusement constitué par un tube 7 de section constante, de diamètre interne 7 mm et de longueur 15 cm, en silicone étanche dans lequel est moulé une matrice élastomère en silicone hydrophile contenant de l'hexamétaphosphate de sodium (HMPS) en dispersion solide.

Le réservoir 105 comporte un orifice de remplissage 113 ménagé dans la paroi supérieure du réservoir 105, cet orifice de remplissage 113 étant fermé par un volet 113A monté pivotant.

Le réservoir 105 comporte, dans le prolongement de l'orifice de remplissage 113, et au voisinage de ce dernier, une grille 109 qui est traversée par l'eau introduite dans le réservoir 105, cette grille 109 formant un panier de stockage dans lequel est disposé un deuxième dispositif de libération d'un agent antitartre 108, dit dispositif de relargage rapide.

Ce dispositif de relargage rapide est avantageusement constitué par un ou plusieurs cristaux 108 d'hexamétaphosphate de sodium (HMPS) qui sont au contact de l'eau uniquement lors du remplissage du réservoir 105. De tels cristaux présentent une importante surface qui est au contact de l'eau lorsque l'utilisateur introduit de l'eau dans le réservoir 105 de sorte qu'ils relarguent du HMPS avec un taux d'environ 0,5 mg/h.

L'appareil ainsi réalisé présente l'avantage d'assurer une fonction anticalcaire efficace, les cristaux 108 permettant de larguer une quantité importante d'HMPS dans l'eau du réservoir 105 lors du remplissage de ce dernier. De plus, le fait que les cristaux 108 ne soient pas disposés dans une zone du réservoir 105 qui se trouve immergée lors du fonctionnement ou du stockage du fer à repasser 1 permet d'éviter un épuisement trop rapide de ces cristaux 108 d'HMPS. On améliore ainsi la durée de vie du dispositif de relargage rapide.

De plus, les cristaux 108 d'HMPS disposés au niveau de l'embouchure du réservoir 105 présentent l'avantage d'être particulièrement visibles par l'utilisateur lorsqu'il effectue l'opération de remplissage du réservoir 105. L'utilisateur peut donc se rendre compte de l'épuisement de ces cristaux 108 HMPS et effectuer un réapprovisionnement de ces cristaux lorsque leur quantité devient trop faible, ces cristaux 108 pouvant par exemple être vendus dans le commerce comme des éléments consommables destinés à cet appareil.

Enfin, même si l'utilisateur n'effectue pas un réapprovisionnement des cristaux 108, l'eau résiduelle qui reste stockée dans le réservoir 105 entre deux séances de repassage permet au dispositif de relargage lent 7 de libérer progressivement une quantité importante d'HMPS qui assure une très bonne efficacité contre la formation de particules de tartre sur les parois de la chambre de vaporisation 3.

L'appareil ainsi réalisé présente donc l'avantage de posséder un dispositif antitartre 7, 108 qui permet de lutter avec la même efficacité contre la formation du tartre quel que soit la fréquence d'utilisation de l'appareil. En effet, dans le cas d'une utilisation très intensive de l'appareil, par exemple plusieurs heures d'utilisation par jour, le dispositif de relargage rapide 108 permet un traitement efficace de l'eau contenue momentanément dans le réservoir 105. Dans le cas d'une utilisation à une fréquence plus faible, par exemple seulement quelques heures par mois, le dispositif de relargage lent 7 permet un traitement efficace de l'eau restée stockée dans le réservoir entre les deux séances de repassage. Bien entendu, l'invention n'est nullement limitée aux modes de réalisation précédemment décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention qui couvre la portée des revendications.

Ainsi, bien que les exemples de réalisation précédemment décrits se rapportent à un appareil de repassage, l'invention s'applique également à tout appareil électroménager à usage domestique comprenant des moyens pour chauffer de l'eau et qui est confronté à la problématique de l'entartrage. A titre d'exemple, l'invention pourra être appliquée à une cafetière, une bouilloire, un lisseur de cheveux à la vapeur, un nettoyeur vapeur...

Ainsi, dans une autre variante de réalisation, le premier dispositif de libération d'un agent antitartre pourra diffuser un agent antitartre présentant une composition chimique différente de celle libérée par le deuxième dispositif de libération d'un agent antitartre. A titre d'exemple, le premier dispositif de libération d'un agent antitartre pourra comporter une matière active qui se dissous très lentement dans l'eau, telle que du phosphonate, et le deuxième dispositif de libération d'un agent antitartre pourra comporter une matière active rapidement soluble dans l'eau tel que de l'acide polyaspartique.

Dans une autre variante de réalisation, les dispositifs de libération d'un agent antitartre pourront être des dispositifs permettant l'injection d'un agent antitartre sous forme liquide. A titre d'exemple, le deuxième dispositif de libération pourra comporter un récipient renfermant l'agent antitartre sous forme liquide et une pompe actionnée à chaque ouverture du bouchon du réservoir d'eau pour injecter une quantité d'agent antitartre prédéterminée dans le réservoir.

## Revendications

1. Appareil électroménager (1) à usage domestique comportant des moyens pour chauffer de l'eau (3) et un premier dispositif de libération (7) d'un agent antitartre dans l'eau destinée à être chauffée, **caractérisé en ce qu'**il comprend au moins un deuxième dispositif de libération (8 ; 108) d'un agent antitartre dans l'eau, le deuxième dispositif de libération (8 ; 108) diffusant ledit agent antitartre avec une vitesse de libération plus élevée que la vitesse de libération de l'agent antitartre diffusé par le premier dispositif de libération (7), le premier dispositif de libération (7) et le deuxième dispositif de libération (8 ; 108) étant disposés dans deux endroits différents de l'appareil.

2. Appareil électroménager selon la revendication 1, **caractérisé en ce que** le premier dispositif de libération (7) est un dispositif de relargage dit lent qui permet de diluer l'agent antitartre dans l'eau avec une vitesse de libération inférieure à 0,1 mg/h et de préférence comprise entre 0,005 mg/h et 0,05 mg/h.

3. Appareil électroménager selon l'une quelconque des revendications 1 à 2, **caractérisé en ce que** le deuxième dispositif de libération (8 ; 108) est un dispositif de relargage dit rapide qui permet de diluer l'agent antitartre dans l'eau avec une vitesse de libération supérieure à 0,1 mg/h et de préférence comprise entre 0,2 mg/h et 1 mg/h et avantageusement de l'ordre de 0,5 mg/h.

4. Appareil électroménager selon l'une quelconque des revendications 1 à 3, **caractérisé en ce que** le premier dispositif de libération comporte une matrice en silicone hydrophile contenant de l'hexamétaphosphate de sodium qui est contenu à l'intérieur d'un tube étanche (7) présentant au moins une extrémité ouverte, et/ou comprend un composé de phosphonate.

5. Appareil électroménager selon l'une quelconque des revendications 1 à 4, **caractérisé en ce que** le deuxième dispositif de libération (8 ; 108) comporte une matrice en silicone hydrophile contenant de l'hexamétaphosphate de sodium qui n'est pas recouverte par un tube étanche de manière à être au contact de l'eau sur toute sa superficie et/ou comprend un cristal d'hexamétaphosphate de sodium, et/ou comprend un acide polyaspartique.

6. Appareil électroménager selon la revendication 1, **caractérisé en ce que** le premier dispositif de libération (7) est disposé dans un endroit où l'eau résiduelle de l'appareil a tendance à être stockée et **en ce que** le deuxième dispositif de libération (8 ; 108) est disposé dans un endroit de l'appareil qui est balayé par l'eau mais où l'eau ne stagne pas.

7. Appareil électroménager selon l'une quelconque des revendications 1 à 6, **caractérisé en ce que** les moyens pour chauffer l'eau (3) sont alimentés par un circuit d'eau comprenant un réservoir (5 ; 105) d'eau.

8. Appareil électroménager selon la revendication 7, **caractérisé en ce que** le deuxième dispositif de libération (108) est disposé dans une partie du circuit d'eau qui est balayée par l'eau introduite dans le réservoir (105), sans être toutefois immergé en permanence.

9. Appareil électroménager selon l'une quelconque des revendications 6 à 8, **caractérisé en ce que** le réservoir (105) comporte un orifice de remplissage (113) et **en ce que** le deuxième dispositif de libération (8 ; 108) est disposé au voisinage de l'orifice de remplissage (113).

10. Appareil électroménager selon l'une quelconque des revendications 6 à 9, **caractérisé en ce que** le premier dispositif de libération (7) est disposé dans le fond du réservoir (5 ; 105).

11. Appareil électroménager selon l'une quelconque des revendications 1 à 10, **caractérisé en ce que** le deuxième dispositif de libération (8; 108) libère un agent antitartre présentant une composition chimique différente de celle de l'agent antitartre libéré par le premier dispositif de libération (7).

12. Appareil électroménager selon l'une quelconque des revendications 1 à 11, **caractérisé en ce que** les moyens pour chauffer l'eau sont un générateur de vapeur (3).

13. Appareil électroménager selon l'une quelconque des revendications 1 à 12, **caractérisé en ce que** l'appareil électroménager est un appareil de repassage à la vapeur.

## Patentansprüche

1. Elektrohaushaltsgerät (1) für den Hausgebrauch, das Mittel zum Erhitzen des Wassers (3) und eine erste Freisetzungsvorrichtung (7) eines Entkalkungsmittels in das Wasser, das dazu bestimmt ist, erhitzt zu werden, umfasst, **dadurch gekennzeichnet, dass** es mindestens eine zweite Freisetzungsvorrichtung (8; 108) eines Entkalkungsmittels in das Wasser umfasst, wobei die zweite Freisetzungsvorrichtung (8; 108) das Entkalkungsmittel mit einer Freisetzungsgeschwindigkeit verteilt, die höher ist als die Freisetzungsgeschwindigkeit des Entkalkungsmittels, das von der ersten Freisetzungsvorrichtung (7) verteilt wird, wobei die erste Freisetzungsvorrichtung (7) und die zweite Freisetzungsvorrichtung (8; 108) an zwei unterschiedlichen Stellen des Geräts angeordnet sind.

2. Elektrohaushaltsgerät nach Anspruch 1, **dadurch gekennzeichnet, dass** die erste Freisetzungsvorrichtung (7) eine Aussalzungsvorrichtung, die langsam genannt wird, ist, die es erlaubt, das Entkalkungsmittel in dem Wasser mit einer Freisetzungsgeschwindigkeit unter 0,1 mg/h und bevorzugt zwischen 0,005 mg/h und 0,05 mg/h zu verdünnen.

3. Elektrohaushaltsgerät nach Anspruch 1 oder 2, **dadurch gekennzeichnet, dass** die zweite Freisetzungsvorrichtung (8; 108) eine Aussalzungsvorrichtung, die schnell genannt wird, ist, die es erlaubt, das Entkalkungsmittel in dem Wasser mit einer Freisetzungsgeschwindigkeit über 0,1 mg/h und bevorzugt zwischen 0,2 mg/h und 1 mg/h und vorteilhafterweise in der Größenordnung von 0,5 mg/h zu verdünnen.

4. Elektrohaushaltsgerät nach einem der Ansprüche 1 bis 3, **dadurch gekennzeichnet, dass** die erste Freisetzungsvorrichtung eine Matrix aus hydrophilem Silikon umfasst, die Natriumhexametaphosphat enthält, das in dem Inneren einer dichten Röhre (7) enthalten ist, die mindestens ein offenes Ende aufweist, und/oder eine Phosphonatverbindung umfasst.

5. Elektrohaushaltsgerät nach einem der Ansprüche 1 bis 4, **dadurch gekennzeichnet, dass** die zweite Freisetzungsvorrichtung (8; 108) eine Matrix aus hydrophilem Silikon umfasst, die Natriumhexametaphosphat enthält, das nicht von einer dichten Röhre abgedeckt ist, so dass es mit dem Wasser auf seiner gesamten Oberfläche in Berührung ist, und/oder ein Kristall-Natriumhexametaphosphat und/oder eine Polyasparaginsäure umfasst.

6. Elektrohaushaltsgerät nach Anspruch 1, **dadurch gekennzeichnet, dass** die erste Freisetzungsvorrichtung (7) an einer Stelle angeordnet ist, wo das Restwasser des Geräts zu lagern tendiert, und dass die zweite Freisetzungsvorrichtung (8; 108) an einer Stelle des Geräts angeordnet ist, die von dem Wasser überstrichen wird, wo das Wasser aber nicht stagniert.

7. Elektrohaushaltsgerät nach einem der Ansprüche 1 bis 6, **dadurch gekennzeichnet, dass** die Mittel zum Erhitzen des Wassers (3) von einem Wasserkreislauf, der einen Wasservorratsbehälter (5; 105) umfasst, versorgt werden.

8. Elektrohaushaltsgerät nach Anspruch 7, **dadurch gekennzeichnet, dass** die zweite Freisetzungsvorrichtung (108) in einem Teil des Wasserkreislaufs angeordnet ist, der von dem Wasser, das in den Vorratsbehälter (105) eingeführt wird, überstrichen wird, ohne jedoch ständig untergetaucht zu sein.

9. Elektrohaushaltsgerät nach einem der Ansprüche 6 bis 8, **dadurch gekennzeichnet, dass** der Vorratsbehälter (105) eine Füllöffnung (113) umfasst, und dass die zweite Freisetzungsvorrichtung (8; 108) in der Nähe der Füllöffnung (113) angeordnet ist.

10. Elektrohaushaltsgerät nach einem der Ansprüche 6 bis 9, **dadurch gekennzeichnet, dass** die erste Freisetzungsvorrichtung (7) auf dem Boden des Vorratsbehälters (5; 105) angeordnet ist.

11. Elektrohaushaltsgerät nach einem der Ansprüche 1 bis 10, **dadurch gekennzeichnet, dass** die zweite Freisetzungsvorrichtung (8; 108) ein Entkalkungsmittel freisetzt, das eine chemische Zusammensetzung aufweist, die von der des Entkalkungsmittels, das von der ersten Freisetzungsvorrichtung (7) freigesetzt wird, unterschiedlich ist.

12. Elektrohaushaltsgerät nach einem der Ansprüche 1 bis 11, **dadurch gekennzeichnet, dass** die Mittel zum Erhitzen des Wassers ein Dampfgenerator (3) sind.

13. Elektrohaushaltsgerät nach einem der Ansprüche 1 bis 12, **dadurch gekennzeichnet, dass** das Elektrohaushaltsgerät ein Dampfbügelgerät ist.

## Claims

1. Household electrical appliance (1) for domestic use including means for heating water (3) and a first device for releasing an anti-scale agent (7) into the water intended for being heated, **characterised in that** it comprises at least one second device for releasing an anti-scale agent (8; 108) into the water, the second device for releasing an anti-scale agent (8; 108) diffusing said anti-scale agent with a higher release speed than the release speed of the anti-scale agent diffused by the first release device (7), the first release device (7) and the second release device (8; 108) being arranged in two different places on the appliance.

2. Household electrical appliance according to claim 1, **characterised in that** the first release device (7) is a slow salting-out device which allows to dilute the anti-scale agent in the water with a release speed of less than 0.1mg/h and preferably comprised between 0.005mg/h and 0.05mg/h.

3. Household electrical appliance according to any one of claims 1 to 2, **characterised in that** the second release device (8; 108) is a so-called rapid salting-out device which allows to dilute the anti-scale agent in the water with a release speed greater than 0.1mg/h and preferably comprised between 0.2mg/h and 1mg/h and advantageously of around 0.5mg/h.

4. Household electrical appliance according to any one of claims 1 to 3, **characterised in that** the first release device includes a hydrophilic silicone matrix containing sodium hexametaphosphate which is contained inside a sealed tube (7) having at least one open end, and/or comprises a phosphonate compound.

5. Household electrical appliance according to any one of claims 1 to 4, **characterised in that** the second release device (8; 108) includes a hydrophilic silicone matrix containing sodium hexametaphosphate which is not covered by a sealed tube so as to be in contact with the water over the whole of its surface area and/or comprises a sodium hexametaphosphate crystal, and/or comprises a polyaspartic acid.

6. Household electrical appliance according to claim 1, **characterised in that** the first release device (7) is arranged in a place where residual water from the appliance tends to be stored and **in that** the second release device (8; 108) is arranged in a place on the appliance which is swept across by water, but where water does not stagnate.

7. Household electrical appliance according to any one of claims 1 to 6, **characterised in that** the means for heating water (3) are supplied by a water circuit comprising a water reservoir (5; 105).

8. Household electrical appliance according to claim 7, **characterised in that** the second release device (108) is arranged in a part of the water circuit which is swept across by water introduced into the reservoir (105), without being however permanently immersed.

9. Household electrical appliance according to any one of claims 6 to 8, **characterised in that** the reservoir (105) includes a filling orifice (113) and **in that** the second release device (8; 108) is arranged in the vicinity of the filling orifice (113).

10. Household electrical appliance according to any one of claims 6 to 9, **characterised in that** the first release device (7) is arranged in the bottom of the reservoir (5; 105).

11. Household electrical appliance according to any one of claims 1 to 10, **characterised in that** the second release device (8; 108) releases an anti-scale agent having a chemical composition different from that of the anti-scale agent released by the first release device (7).

12. Household electrical appliance according to any one of claims 1 to 11, **characterised in that** the means for heating water are a steam generator (3).

13. Household electrical appliance according to any one of claims 1 to 12, **characterised in that** the household electrical appliance is a steam iron.
